# NEUE EUROPÄISCHE PATENTSCHRIFT

(11) **EP 0 440 020 B2**
(45) Veröffentlichungstag und Bekanntmachung des Hinweises auf die Entscheidung über den Einspruch: **28.06.2000**
(45) Hinweis auf die Patenterteilung: 29.03.1995
(21) Anmeldenummer: 91100158.4
(22) Anmeldetag: 07.01.1991
(51) Int. Cl.: B29C 45/17, B29C 45/56

(54) **Verfahren zum Herstellen von hohlgespritzten Formkörpern aus Kunststoff**
Method for producing hollow injection moulded bodies from plastic material
Procédé pour fabriquer des corps creux moulés par injection en matière plastique

(30) Priorität: 29.01.1990 DE 4002503
(43) Veröffentlichungstag der Anmeldung: 07.08.1991
(73) Patentinhaber: SCHADE KG, D-58815 Plettenberg (DE)
(72) Erfinder: Strunk, Harald, W-5970 Plettenberg (DE)
(74) Vertreter: Gossel, Hans K., Dipl.-Ing.

(56) Entgegenhaltungen:
- EP-A- 0 127 961
- EP-A- 0 289 230
- EP-A- 0 320 925
- DE-A- 3 823 650
- JP-A- 1 168 425
- US-A- 2 331 688
- US-A- 4 101 617

## Beschreibung

Die Erfindung betrifft ein Verfahren zum Herstellen von im Querschnitt dünne und dicke, hohlgespritzte Wandbereiche aufweisenden Formkörpern aus Kunststoff nach dem Oberbegriff des Patentanspruchs 1 und eine Vorrichtung zur Durchführung dieses Verfahrens.

Bei einem aus EP-A-0 289 230 bekannten Verfahren dieser Art wird in den entsprechend der Außenkontur des Formteils ausgestalteten Innenraum der Form die Kunststoffschmelze eingespritzt. Dabei sammelt sich die Schmelze vorzugsweise in den Bereichen, in denen dem Material der geringste Widerstand entgegengesetzt wird, das heißt in Bereichen, in denen die Höhe des Formkammerquerschnittes am größten ist, bevor sie in die Querschnittsbereiche eindringt, in denen dünnere Wandungsstärken ausgebildet werden. Bei vielen der zu spritzenden Formkörper, zum Beispiel Mittelkonsolen, Verkleidungsteilen, Armlehnen oder dergleichen, die im Automobilbau Verwendung finden, aber auch bei Möbelteilen, wie zum Beispiel Tischplatten, Arm- und Rückenlehnen und dergleichen, oder bei beliebigen anderen Teilen auf allen denkbaren Anwendungsgebieten ist das Querschnittsverhältnis der einander benachbarten Dickstellenbereiche zu den Dünnstellenbereichen oftmals zu groß, um weiche, gut ausgeformte Querschnittsübergänge auszubilden. Die Übergänge zwischen benachbarten Bereichen kleinerer und größerer Querschnittsstärken bilden bei solchen gespritzten Formkörpern in der Praxis stets kritische Bereiche, denn beim Ausformen der Schmelze während des Herstellungsprozesses läßt es sich oftmals nicht vermeiden, daß vor allem wenn das Verhältnis von der Dickstelle zur Dünnstelle zu groß ist, die Formkörper an den Übergangsstellen leicht brechen.

Auch bilden sich an solchen Stellen vielfach sichtbare Fließmarkierungen und Einfallsstellen, weil dem in die Schmelze eingepreßten Gas, durch das die Schmelze an die Innenwandungen des Formhohlraumes nach außen gedrückt wird, in den Übergangsbereichen ein zu hoher Widerstand entgegengesetzt wird und das Gas sich nicht im gesamten Hohlraum gleichmäßig verteilen kann, so daß außerdem eine ungleichmäßige Ausformung der Schmelze stattfindet. Sind die Übergänge zwischen den Dick- und Dünnstellen zu schmal, kommt es in der Praxis vor, daß die Schmelze überhaupt nicht mehr in die Dünnstellenbereiche der Form eindringen kann oder sich so ungleichmäßig verteilt, daß bei nach dem bekannten Verfahren hergestellten Formkörpern hohe Ausschußquoten gegeben sind.

Der Erfindung liegt deshalb die Aufgabe zugrunde, ein Verfahren der gattungsgemäßen Art so weiterzuentwickeln, daß die gespritzten Formkörper auch dann konturengenau und fehlerfrei produziert werden können, wenn das Querschnittsverhältnis zwischen den benachbarten Dick- und Dünnstellen besonders groß ist, so daß die Produktions-Ausschußquoten auf ein Minimum herabgesetzt werden können.

Diese Aufgabe wird bei einem Verfahren der gattungsgemäßen Art durch die kennzeichnenden Merkmale des Patentanspruchs 1 gelöst.

Durch das erfindungsgemäße Verfahren wird erreicht, daß sich die in den Formhohlraum eingespritzte Schmelze nicht mehr vornehmlich in den Dickstelleninnenräumen der Form sammelt, sondern die Schmelze wird während der Ausformung gezielt auch in die Dünnstellen-Innenräume der Form gedrängt, je nachdem, in welchem Verhältnis der Formquerschnitt verändert wird.

Durch die Veränderbarkeit des Hohlraumquerschnittes findet praktisch bereits vor der endgültigen Ausformung des Formkörpers eine Vorformung statt. Da durch den Vorschlag nach der Erfindung die Verformungsarbeit gegenüber den bisher bekannten Verfahren wesentlich herabgesetzt wird, werden kürzere Spritzgießzyklen und damit eine wesentlich höhere Spritzleistung erreicht.

Aus der DE-A-38 23 650 ist ein einstückig durch Spritzgießen hergestellter Flaschenkasten aus Kunststoff mit einem Boden und rechtwinklig von demselben abstehenden, untereinander verbundenen, äußeren Wänden bekannt, von denen wenigstens eine mit einer etwa rechteckigen Durchbrechung zum Tragen des Kastens versehen ist. An dem oben liegenden Rand der Durchbrechung ist eine Verdickung mit im wesentlichen kreisförmigem Querschnitt angebracht, deren äußere Abmessungen groß sind im Verhältnis zur Wandstärke der Wände und deren Wandstärke aufgrund mindestens eines offenen oder geschlossenen Hohlraumes etwa gleich der Wandstärke der Wände ist. Der offene Hohlraum wird dabei beim Spritzgießen durch am Werkzeug angebrachte Schieber erzeugt, die nach dem Spritzen des Flaschenkastens zurückgezogen werden, um diesen entformen zu können. Der geschlossene Hohlraum in der kreisförmigen Verdickung kann durch Gasinjektion während des Spritzvorganges erzeugt werden. Bei einer derartigen Herstellung kommt es jedoch zu unansehnlichen Ausformungen der Verdickung, weil die die Verdickung ausformenden Formhohlräume aufgrund ungünstiger Fließverhältnisse eine ungünstige Füllung mit Material erhalten und weil nur bei teilweiser Füllung der Formhohlräume ein geschlossener Hohlraum in der Verdickung durch Gasinjektion ausgebildet werden kann, die dann aber aufgrund der unvollständigen Füllung ein ungleichmäßiges Aussehen erhält.

Aus US-A-2,331,688 ist ein Verfahren zur Herstellung von Hohlkörpern aus Kunststoff bekannt, bei dem in einen Formhohlraum eine vorbestimmte Menge schmelzflüssigen Kunststoffs eingespritzt und anschließend unter gleichzeitigem Einblasen von Druckluft der Formhohlraum derart vergrößert wird, daß sich der Kunststoffhohlkörper ausbildet. Nach diesem bekannten Verfahren lassen sich aber nur Kunststoffhohlkörper herstellen, deren Querschnitt der Kontur des im wesentlichen zylindrischen Formhohlraums entspricht, wobei der nach diesem bekannten Verfahren hergestellte Hohlkörper im wesentlichen durchgehend eine gleiche Wandstärke aufweist. Dieses bekannte Verfahren stellt daher eine Variante des bekannten Hohlkörper-Spritzblasverfahrens dar, nach dem sich ausschließlich Hohlkörper mit einfachen Querschnittsformen aus thermoplastischem Kunststoff herstellen lassen.

Aus US-A-4,101,617 ist ein Spritz-Gieß-Verfahren zur Herstellung eines Hohlkörpers mit zu einer Symmetrieebene spiegelbildlichen Schalen bekannt, bei dem in eine zylindrische Form, deren Querschnitt der Außenkontur des herzustellenden Hohlkörpers entspricht, ein einen Formhohlraum begrenzender Kolben eingefahren wird, in den dadurch gebildeten Formhohlraum Kunststoff eingespritzt und dann in den schmelzflüssigen Kunststoff Druckluft unter Ausfahren des eine Formwandung bildenden Kolbens eingeblasen wird, so daß sich dann in der Endstellung des Kolbens ein dem vergrößerten Formhohlraum entsprechender Hohlkörper aus Kunststoff ausbildet. Auch dieses bekannte Verfahren stellt eine Variante des üblichen Kunststoff-Blasverfahrens dar, das angewendet wird, wenn Formkörper mit größerem Hohlraumvolumen hergestellt werden sollen.

Diese vorbekannten Verfahren konnten somit das erfindungsgemäße Verfahren nicht nahelegen. Und auch eine Übertragung des aus der US-A-4,101,617 bekannten Verfahrens zur Hohlkörperbildung auf das Verfahren zur Bildung der Verdickung aus der DE-A-38 23 650 könnte für den Fachmann nicht in Betracht kommen, weil bei Anwendung eines beweglichen Formteils zur Bildung der Verdickung deren vorgeschriebener, etwa kreisförmiger Querschnitt nicht mehr erreichbar wäre.

Zweckmäßig wird das Ausgangsvolumen des Formhohlraumes anfangs so groß gehalten, daß zunächst die gesamte Menge der Schmelze in den Hohlraum eingespritzt wird, bevor der Formhohlraum vergrößert und die Schmelze ausgeformt wird. Welches Verhältnis zwischen dem Ausgangs- und Endvolumen des Formkörperhohlraumes gewählt wird, hängt von der Art und der Kontur des zu spritzenden Formkörpers ab.

Eine Vorrichtung zur Durchführung des erfindungsgemäßen Verfahrens ist Gegenstand der Ansprüche 4 bis 7.

Je nachdem, wie weit das Zusatzwerkzeug in die Dickstelleninnenräume hineinragt, läßt sich der Innenraum der Form beliebig variieren.

In der Zeichnung wird das erfindungsgemäße Verfahren und die dazu eingesetzte Vorrichtung näher erläutert. In der Zeichnung zeigen:
- Figur 1: Die Vorrichtung nach der Erfindung im Vertikalschnitt, bei der sich das Zusatzwerkzeug in seiner oberen Ausgangsstellung befindet,
- Figur 2: eine der Figur 1 entsprechende Schnittdarstellung, in der das Zusatzwerkzeug seine untere Endstellung einnimmt und
- Figur 3: ein mit der Vorrichtung nach den Figuren 1 und 2 hergestelltes Formteil in einer Ebene entsprechend der Schnittlinie III-III in Figur 1 gesehen.

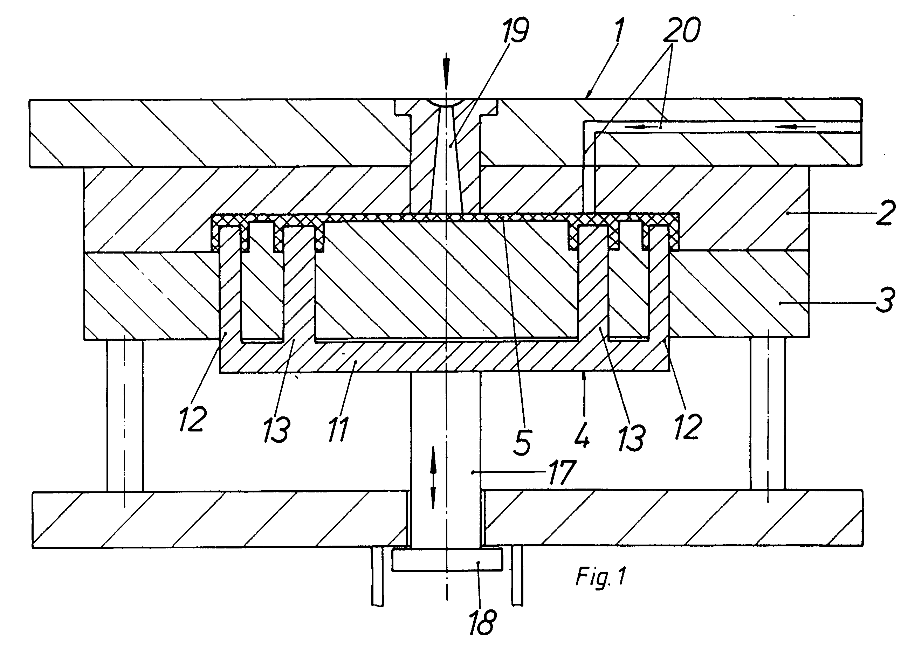

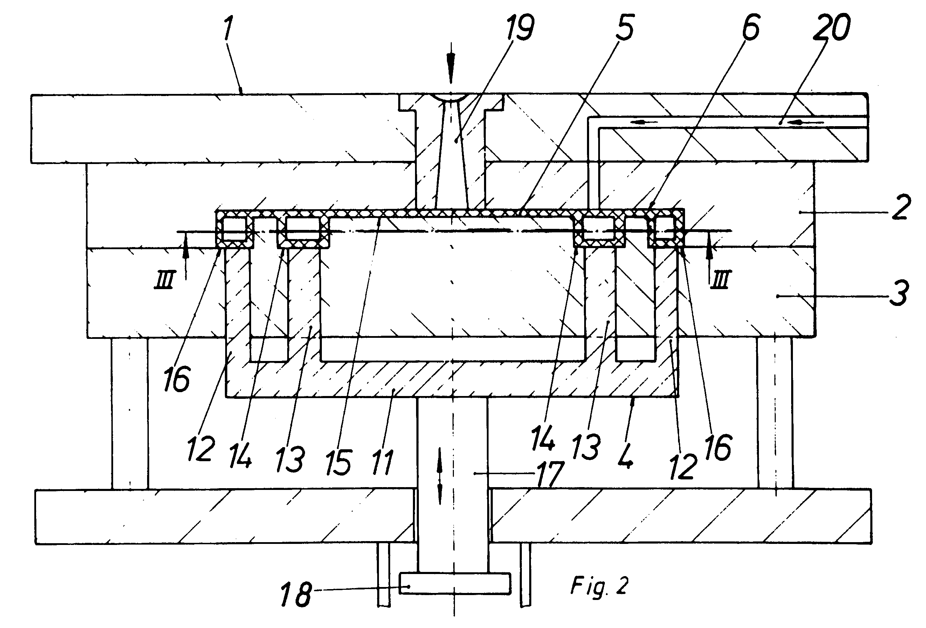

Die in den Figuren 1 und 2 dargestellte Vorrichtung umfaßt eine als ganzes mit 1 bezeichnete Form, die im wesentlichen aus eine Oberteil 2, eine Unterteil 3 und einem Zusatzwerkzeug 4 besteht, das in den durch Wandungen des Oberteils 2 und des Unterteils 3 begrenzten Formhohlraum 5, dar in den Figuren 1 und 2 bereits mit einer Spritzgießmasse ausgefüllt ist, ein- und ausfahrbar ist. Im Vergleich der Figuren 1 und 2 ist erkennbar, daß der Formhohlraum 5 in Abhängigkeit von der jeweiligen Betriebsstellung des Zusatzwerkzeuges 4 zur Form 1 in seinem Volumen veränderbar ist, wobei die Darstellung in Figur 1 das kleinste Formhohlraumvolumen und die in Figur 2 das vergrößerte Endvolumen der Formkammer erkennen läßt.

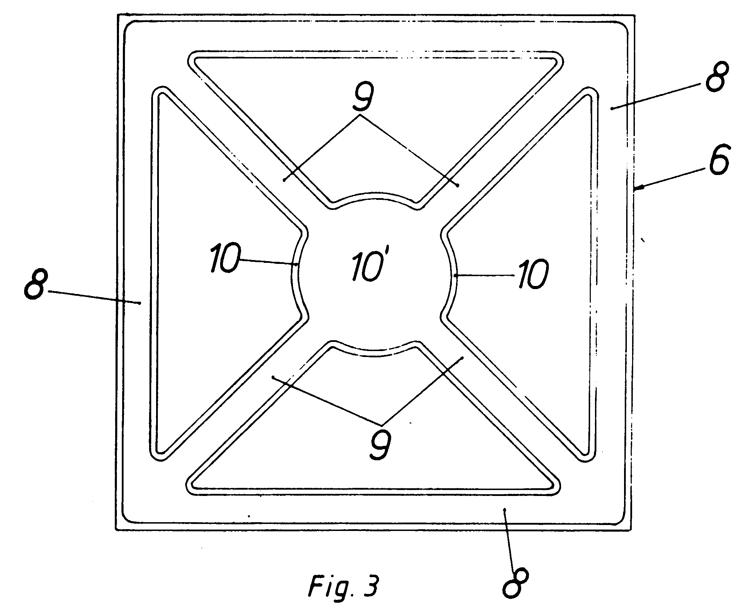

Die Figuren 2 und 3 zeigen, daß der fertige Spritzkörper 6 aus einer dünnwandigen Platte mit in seinem Randbereich umlaufenden Hohlprofilstegen 8 und von den Randbereichen aus diagonal nach innen verlaufenden Stegen 9 gebildet ist. Die im Querschnitt jeweils rohrförmig ausgestalteten Dickstellen-Hohlprofilstege 8,9 des Formkörpers stehen untereinander in Verbindung und laufen in der Unteransicht des Formkörpers (Figur 3) in der Mitte bei 10' in einem Stutzen 10 aus. Die jeweilige Kontur des Formkammer-Innenraumes 5 ergibt mich aus der für einen zu produzierenden Formkörper 6 gewünschten Außenkontur des Formkörpers.

Das Zusatzwerkzeug 4 besteht bei dem dargestellten Beispiel aus einer außerhalb und unterhalb des Formunterteils 3 angeordneten Grundplatte 11, an der in Richtung zum Oberteil 2 zeigende Stege 12,13 entsprechend der gewünschten Kontur der Dickstellen-Hohlprofilstege 8,9 des Formkörpers 6 angeformt sind. Die Stege 12,13 sind so lang, daß sie unter Durchdringung von entsprechend angepaßten Lagerführungen im unterteil 3 der Form 1 in der oberen Stellung des Zusatzwerkzeuges 4 (Figur 1) weit in den Innenraum 5 der Form hineinragan. Durch die Stegkonturen 12,13 werden die mit 14,16 bezeichneten Dickstelleninnenräume ausgeformt. Die verbleibenden Rest- Innenraumquerschnitte umschließen den Dünnstellenraum 15. Durch die obere Stellung des Zusatzwerkzeuges 4 wird das Anfangsvolumen, durch die untere Stellung das Endvolumen der Dickstelleninnenräume der Form 1 bestimmt. Die miteinander korrespondierenden Dickstellen- und Dünnstellenbereiche des Formköpers 6 mit ihren ineinanderfließenden Übergängen sind besonders deutlich aus Figur 3 erkennbar. Das Oberteil 2 und das Unterteil 3 der Form 1 können in nicht dargestellter, bekannter Weise zur Herausnahme des Formteils 6 nach Abschluß jedes Spritzzyklus voneinander getrennt werden. Beim Auseinanderfahren des Unterwerkzeugs vom Oberwerkzeug folgt das Zusatswerkzeug 4 der Bewegung des Unterteils 3, wird jedoch nach der Erfindung unabhängig zur Veränderung des Formhohlraumvolumens 5 durch eine den Bewegungsantrieb bildende Kolben-/Zylindereinheit 18 angetrieben.

Die Schmelze wird in bekannter Weise durch einen Kanal 19 im Oberteil 2 der Form 1 in die Formkammer 5 zyklisch eingespritzt. Der Kanal 19 liegt bei dem gezeigten Beispiel im Zentrum der Form 1, kann jedoch auch an beliebig anderer geeigneter Stelle angeordnet sein. Das Gas wird durch eine Bohrung 20 des Oberteils in die Formkammer eingepreßt. In Abwandlung von der dargestellten Ausführungsform können selbstverständlich auch statt jeweils einer Zuführung für das Gas bzw. die Schmelze mehrere Zuführungen vorgesehen werden. Die Schmelze- und Gaszuführung kann sowohl von oben als auch von unten erfolgen, je nach Art des Systems.
Das erfindungsgemäße Herstellungsverfahren lauft ab, indem zunächst vor dem Einspritzen der Schmelze während eines Spritzzyklus das Zusatzwerkzeug 4 über die Kolben-/Zylindereinheit 17,18 gemäß Figur 1 in die obere Stellung verfahren wird. Dabei liegen die Außenkonturen der in den Formhohlraum hineinragenden Stegenden 12,13 in einem Abstand zu den Innenflächen des Formhohlraumes 5. Der Abstand entspricht in etwa der Dicke der Wandungen der Platte des zu bildenden Formkörpers 6. Die Dickstellen-Ausnehmungen in der Form 1 im Unter- oder Oberteil 3 bzw. 2 sind stets so groß, daß die jeweils oberen Konturenbereiche der in den Hohlraum ragenden Enden der Stege 12,13 unter Bildung von Spalten zu den Innenflächen der Dickstellen-Ausnehmungen in der Form liegen, das heißt, die oberen Randbereiche der Stegenden 12,13 werden mit der Schmelze umspritzt.

Die Figur 1 zeigt, daß infolge des in den Formhohlraum ausgefahrenen Zusatzwerkzeuges zunächst der Formkörper als Massivteil vorgeformt wird, so daß es in diesem Vorformstadium des Herstellungsprozesses kritische Übergänge zwischen den Dünn- und späteren Dickstellenbereichen nicht gibt. Während dieses Vorformstadiums werden weitgehend gleichmäßige Wandstärken des Formkörpers erreicht, weil sich die Schmelze in den im wesentlichen gleichstarken Spalten sowohl in den Dünnstellen- als auch den Dickstellenbereichen in der Hohlkammer ungehindert gleichmäßig verteilen kann und dadurch vermieden wird, daß sich die Schmelze wegen des geringen Widerstandes zunächst in Dickstellenhohlräumen ausbreitet und dabei Gefahr läuft, daß sie sich dann nicht mehr entsprechend gleichmäßig in den Dünnstellenbereichen ausbreiten kann. Sobald das Gas in die Formkammer gepreßt wird, gleich ob dies während oder nach der Schmelzezufuhr erfolgt, wird das Zusatzwerkzeug 4 entweder kontinuierlich, stufenweise oder auch schlagartig in einem Schritt in seine untere Endstellung (Figur 2) gefahren, indem die Kolben-/Zylindereinheit 17,18 entsprechend beaufschlagt und gesteuert wird. Mit dem Ausfahren des Zusatzwerkzeuges geben die Stegenden 12,13 nach und nach den anfangs kleinen Spaltquerschnitt im Dickstellenbereich (Figur 1) bis zu seinem größten Endvolumen (Figur 2) frei und das Gas, das für seine Ausbreitung ebenfalls stets den Weg des geringsten Widerstandes sucht, breitet sich in den größeren Querschnittsbereichen, die die Dickstellenbereiche bilden, aus, drückt daß Schmelzematerial von innen nach außen gegen die Formhohlraum-Innenwandungen und bildet dadurch gleichmäßige im gesamten Formkörper über die Kanäle und Zwischenverbindungen 8,9,10',10 (Figur 3) kommunizierende Hohlräume innerhalb des Formkörpers aus, so daß sich sanfte Übergänge und gleichmäßig ausgeformte Querschnittskonturen im gesamten Formkörper ausbilden. Nach dem Aushärten der Schmelze wird die Form durch Auseinanderfahren des Unterteils 3 vom Oberteil 2 der Form geöffnet, der Gasdruck gegenüber der Atmosphäre oder in sonstiger weise freigegeben und der geöffneten Form der fertige Formkörper entnommen bzw. aus diesem ausgeworfen.

## Patentansprüche

1. Verfahren zum Herstellen von im Querschnitt eine dünne Platte mit übergängen zu dicken, hohlgespritzten (8, 9) Wandbereichen aufweisenden Formkörpern (6) aus Kunststoff,
bei dem in einen im wesentlichen geschlossenen und konturengerecht gestalteten Formhohlraum (5) einer Spritzform (1) eine vorgegebene Menge einer Kunststoffschmelze eingespritzt und diese mittels eines unter Druck stehenden Gases zu dem Formkörper (6) ausgeformt wird,
**dadurch gekennzeichnet,**
daß vor dem Einspritzen der Schmelze während eines Spritzzyklus ein Stege (12, 13) aufweisendes Zusatzwerkzeug (4) in eine Stellung verfahren wird, in der die Außenkonturen der in den Formhohlraum hineinragenden Stegenden (12, 13) in einem Abstand zu den Innenflächen des Formhohlraums (5) liegen, der in etwa der Dicke der Wandungen der Platte des zu bildenden Formkörpers (6) entspricht, und
daß zum Ausformen der Schmelze zum Formkörper (6) der Formhohlraum (5) in den Bereichen (14, 16), in denen sich die dicken, hohlgespritzten Wandbereiche (8, 9) des Formkörpers (6) ausbilden, durch Ausfahren des Zusatzwerkzeugs in seinem Querschnitt verändert wird.

2. Verfahren nach Anspruch 1, dadurch gekennzeichnet, daß das Ausgangsvolumen des Formhohlraums (5) zu Beginn der Schmelzeinjektion so groß gehalten wird, daß zunächst die gesamte Menge der Schmelze in den Formhohlraum (5) eingespritzt wird, bevor der Formhohlraum (5) vergrößert und die Schmelze ausgeformt wird.

3. Verfahren nach Anspruch 1 oder 2, dadurch gekennzeichnet, daß zunächst die Schmelze in den Formhohlraum (5) eingespritzt und danach das Gas injiziert wird.

4. Vorrichtung zur Durchführung des Verfahrens nach einem der Ansprüche 1 bis 3, bestehend aus einer Spritzform (1) mit einem im wesentlichen geschlossenen Formhohlraum (4), dessen Konturen dem herzustellenden, eine dünne Platte mit übergängen zu dicke Wandbereiche aufweisenden Formkörper (6) entsprechen,
**dadurch gekennzeichnet,**
daß in Führungen eines an die dicken, hohlgespritzten Wandbereiche (8, 9) des Formkörpers (6) angrenzenden Wandbereichs (3) der Spritzform (1) ein Zusatzwerkzeug (4) bis in einen Abstand zu den Innenflächen des Formhohlraums verfahrbar geführt ist, der in etwa der Dicke der Wandungen der Platte des zu bildenden Formkörpers (6) entspricht und
daß das Zusatzwerkzeug (4) ein oder mehrere in die Bereiche (14, 16), in denen sich die dicken, hohlgespritzten Wandbereiche (8, 9) des Formkörpers (6) ausbilden, der Spritzform (1) hineinfahrbare Stege (12, 13) aufweist.

5. Vorrichtung nach Anspruch 4 dadurch gekennzeichnet, daß das Zusatzwerkzeug (4) auf Führungssäulen (17) oder -stiften relativ gegenüber dem Formhohlraum (5) bewegbar ist.

6. Vorrichtung nach einem der Ansprüche 4 bis 5, dadurch gekennzeichnet, daß das Zusatzwerkzeug (4) von einer Kolben-Zylinder-Einheit (18) angetrieben ist.

7. Vorrichtung nach einem oder mehreren der Ansprüche 4 bis 6, dadurch gekennzeichnet, daß das Gas und die Schmelze über jeweils eine oder mehrere getrennte Leitungen (19, 20) in den Formhohlraum (5) der Spritzform (1) injizierbar sind.

## Claims

1. Method for producing hollow injection moulded bodies (6) from plastic material featuring a plate of thin cross section with transitions to thick, hollow injected wall areas (8, 9),
wherein in an essentially closed cavity (5) of contour-true design of an injection mould (1) is injected a predetermined quantity of a plastic melt, this then being formed into the moulding (6) by means of a pressurised gas,
**characterised in that**
prior to injection of the melt, during an injection moulding cycle, an auxiliary tool (4) featuring lands (12, 13) is traversed into a position in which the outer contours of lands (12, 13) projecting into the mould cavity lie at a distance from the inner surfaces of said cavity (5) that approximately corresponds to the thickness of the walls of the plate of the hollow body (6) to be moulded,
and that in order to mould the melt into the shape of said hollow body (6), cavity (5) is modified in its cross section in areas (14, 16) in which the thick, hollow injection moulded wall areas (8, 9) of moulding (6) are formed, by traversing the auxiliary tool (4).

2. Method according to Claim 1, characterised in that the initial volume of the mould cavity (5) at the start of the melt injection process is kept sufficiently large so that initially the entire quantity of the melt can be injected into said cavity (5) before cavity (5) is increased in size and the melt undergoes the moulding process.

3. Method according to Claim 1 or 2, characterised that initially the melt is injected in the mould cavity (5), and thereafter the gas is injected.

4. Apparatus for performing the process (method) according to one of Claims 1 to 3, comprising an injection mould (1) with an essentially closed cavity (5), the contours of which correspond to the hollow body (6) to be moulded featuring a thin plate with transitions to thick wall areas,
**characterised in that**
traversed in the guides of one of the wall areas (3) of the injection mould (1) adjacent to the thick, hollow-injected wall areas (8, 9) of the hollow body moulding (6) is an auxiliary tool (4) that travels to a distance from the inner surfaces of the cavity that approximately corresponds to the thickness of the walls of the plate of the moulding (6) being formed,
and that the auxiliary tool (4) features one or several lands (12, 13) which can be traversed into the areas (14, 16) of the mould (1) in which the thick, hollow injection moulded wall areas (8, 9) of the hollow body moulding (6) are formed.

5. Apparatus according to Claim 4, characterised in that the auxiliary tool (4) can be traversed relative to the cavity (5) on guide columns (17) or guide pins.

6. Apparatus according to one of Claims 4 to 5, characterised in that the auxiliary tool (4) is driven by a piston-cylinder unit (18).

7. Apparatus according to one or several of Claims 4 to 6, characterised in that the gas and the melt can be injected into the cavity (5) of the injection mould (1) though either one or several separate lines (19, 20).

## Revendications

1. Procédé pour fabriquer des corps creux (6) en plastique qui comportent une plaque mince en section transversale présentant des transitions vers des zones de paroi épaisses creuses moulées par injection (8, 9),
dans lequel dans une cavité de moule substantiellement fermée (5) et aux contours conformes d'un moule à injection (1) une quantité prédéterminée d'un plastique en fusion est injectée et est moulée au moyen d'un gaz sous pression pour former ledit corps creux,
caractérisé en ce que
avant l'injection de la fusion pendant un cycle d'injection un outil supplémentaire (4) présentant des surfaces d'appui (12, 13) est déplacé dans une position dans laquelle les contours extérieurs des extrémités des surfaces d'appui (12, 13) avançant dans la cavité du moule se trouvent à une distance par rapport aux surfaces intérieures de ladite cavité (5), qui correspond approximativement à l'épaisseur des parois de la plaque du corps creux (6) à mouler, et
que pour le moulage de la fusion pour former le corps creux (6), la cavité (5), dans les zones (14, 16) dans lesquelles se forment les zones de paroi épaisses creuses moulées par injection (8, 9) du corps creux (6), est modifiée dans sa section transversale par le mouvement de l'outil supplémentaire.

2. Procédé selon la revendication 1, caractérisé en ce que le volume de départ de la cavité du moule (5) est maintenu au début de l'injection de la fusion dans des dimensions telles que d'abord la totalité de la quantité de fusion est injectée dans la cavité du moule (5) avant que ladite cavité (5) soit agrandie et la fusion moulée.

3. Procédé selon les revendications 1 ou 2, caractérisé en ce que la fusion est d'abord injectée dans la cavité du moule (5), et ensuite le gaz est injecté.

4. Dispositif pour la réalisation du procédé selon l'une quelconque des revendications 1 à 3, consistant en un moule à injection (1) présentant une cavité de moule (5) substantiellement fermée dont les contours correspondent au corps creux (6) à mouler qui comporte une plaque mince présentant des transitions vers des zones de paroi épaisses, caractérisé en ce que dans des guidages d'une zone de paroi (3) du moule à injection (1) voisine des zones de paroi épaisses creuses moulées par injection (8, 9) du corps creux (6) un outil supplémentaire (4) est guidé de manière à pouvoir se déplacer jusqu'à une distance par rapport aux parois intérieures de la cavité du moule, qui correspond approximativement à l'épaisseur des parois de la plaque du corps creux (6) à mouler et que l'outil supplémentaire (4) présente une ou plusieurs surfaces d'appui (12, 13) pouvant avancer dans les zones (14, 16) du moule à injection (1) dans lesquelles se forment les zones de paroi épaisses creuses moulées par injection du corps creux (6).

5. Dispositif selon la revendication 4, caractérisé en ce que l'outil supplémentaire (4) peut être déplacé sur des colonnes de guidage (17) ou pointes de guidage par rapport à la cavité du moule (5).

6. Dispositif selon l'une quelconque des revendications 4 à 5, caractérisé en ce que l'outil supplémentaire (4) est entraîné par une unité piston/cylindre (18).

7. Dispositif selon l'une ou plusieurs des revendications 4 à 6, caractérisé en ce que soit le gaz, soit la fusion peuvent être injectés au moyen d'un ou de plusieurs conduits séparés (19, 20) dans la cavité (5) du moule à injection (1).
